# EUROPEAN PATENT APPLICATION

(11) **EP 4 668 074 A1**
(43) Date of publication of application: **24.12.2025**
(21) Application number: 25176200.1
(22) Date of filing: 13.05.2025
(51) Int. Cl.: G06F 3/041, G06F 3/03, G06F 3/044

(54) **TOUCH DETECTION DEVICE, TOUCH PANEL DEVICE, AND TOUCH DETECTION DEVICE CALIBRATION METHOD**

(30) Priority: 19.06.2024 JP 2024098919
(71) Applicant: Alps Alpine Co., Ltd., Ota-ku, Tokyo 145-8501 (JP)
(72) Inventor: Ichikawa, Teiichi, Iwaki-city, Fukushima (JP)
(74) Representative: Schmitt-Nilson Schraud Waibel Wohlfrom Patentanwälte Partnerschaft mbB

(57) **Abstract**

"A touch detection device, a touch panel device, and a touch detection device calibration method" for performing calibration in a situation where performing calibration is appropriate are provided. With a detected capacitance of each electrode regarded as a parasitic capacitance of the electrode, when a sum of amounts of changes in the parasitic capacitances of electrodes is greater than a predetermined threshold value and a variation index value indicating the magnitude of variation in the parasitic capacitances of the electrodes is less than a predetermined threshold value, a calibration controller calibrates each detection circuit of a sense block so as to detect the capacitance of each electrode while setting the parasitic capacitance of the electrode at a center level.

## Description

The present disclosure relates to a technique for calibrating a touch detection device for detecting a touch on a capacitance-type touch panel.

A technique known as a technique for calibrating a touch detection device configured to detect the amount of change in the capacitance of each point on a capacitance-type touch panel calibrates the touch detection device such that the amounts of changes in the capacitances at all coordinates can be detected in the same manner regardless of the difference in their base capacitances, which are the reference capacitances for detecting the amounts of changes in the capacitances in response to a touch (the base capacitance being the parasitic capacitance of each electrode in a case of a self-capacitance system, and the mutual capacitance between Y and X electrodes in a non-touched state in a case of a mutual capacitance system) (for example, JP2015-141556A).

Another known technique calibrates a touch detection device every time the touch detection device is activated (i.e., the power is turned on) (for example, WO2017/158907).

It takes a large load to perform the above-described calibration of a touch detection device every time the touch detection device is activated. Moreover, it is redundant to perform calibration also when the base capacitances have not changed so much that it will no longer be possible to detect the amounts of changes in the capacitances correctly.

Therefore, it is conceivable to set the measurement range in which to detect a capacitance to be so wide as to include an expected range of capacitance change, to investigate, at the time of activation or the like, whether the base capacitance has changed so much that the range of capacitance change will be predicted to deviate from the current measurement range, and to re-set the measurement range only when the base capacitance has changed so much.

However, in this way, the calibration of the touch detection device is performed also when the base capacitances have changed greatly in a part of the touch panel due to temporary placement of a conductive material near the touch panel, and the like. In this case, it is not necessarily appropriate to perform calibration because it is predictable that the conductive material will be removed afterwards. That is, for example, if calibration is performed in such a case, it may become impossible to detect an amount of capacitance change correctly after the conductive material is removed.

Therefore, an object of the present disclosure is to provide a touch detection device, a touch panel and a calibration method such that to perform calibration of the touch detection device for detecting the amount of capacitance change of each point on a capacitance-type touch panel only in a situation in which performing the calibration is truly appropriate.

The present disclosure relates to a touch detection device, a touch panel and a calibration method according to the appended claims. Embodiments are disclosed in the dependent claims.

According to an aspect, a touch detection device configured for detecting a touch on a touch panel of a capacitance type includes: a touch detection circuit configured to detect a capacitance of each of a plurality of points on the touch panel; and a calibration part configured to perform calibration for adjusting a range in which the touch detection circuit detects the capacitance of each point. Here, the calibration part acquires, at a predetermined opportunity, capacitances of the plurality of points detected by the touch detection circuit. When a change level indicating a level of a change in the capacitance of each point acquired, from a capacitance thereof in a last calibration, is greater than a predetermined level, and an index value indicating a degree of variation in the capacitances of the points acquired is less than a predetermined value, the calibration part performs calibration for adjusting the range in which the touch detection circuit detects the capacitance of each point such that the range includes both a capacitance of the point when the point is not touched and a capacitance of the point when the point is touched, based on the capacitance of the point acquired.

In the touch detection device, the calibration part may use, as the change level, a sum of amounts of changes in the capacitances of the plurality of points acquired, from capacitances in the last calibration.

In the touch detection device, the calibration part may use, as the index value, a difference between a maximum value and a minimum value of the capacitances of the points acquired.

Alternatively, or additionally, in the touch detection device, the calibration part may use, as the index value, a difference between a maximum value and a minimum value of moving averages of the capacitances of the points acquired, each of the moving averages being a moving average calculated for two or more points in one direction on the touch panel, where the one direction is a moving direction.

Alternatively, or additionally, the calibration part may use, as the index value, a difference between a maximum value and a minimum value of averages of the capacitances of the points acquired, the averages being averages calculated in a plurality of regions obtained by dividing the touch panel in at least one direction, respectively.

In the touch detection device, the calibration part may adjust the range in which the touch detection circuit detects the capacitance of each point to a range centering on the capacitance of the point acquired.

In the touch detection device, the calibration part may correct the capacitance of each point acquired, such that a designed capacitance variation is at least partially offset, and calculate, as the index value, a value indicating a degree of variation in the capacitance of each point corrected.

In the touch detection device, the calibration part may acquire the capacitances of the plurality of points detected by the touch detection circuit after the calibration is performed. When the index value indicating the degree of variation in the capacitances of the points thus acquired is greater than the predetermined value, the calibration part may return the range in which the touch detection circuit detects the capacitance of each point to the range before the calibration is performed.

In the touch detection device, the predetermined opportunity is, for example, activation of the touch detection device.

In the touch detection device, according to an aspect, the touch panel is a touch panel of a self-capacitance type including a plurality of X electrodes and a plurality of Y electrodes, and each of the X electrodes and each of the Y electrodes may be the point at which the capacitance is detected by the touch detection circuit.

The present disclosure also provides a touch panel device including the touch detection device described above and a touch panel of the capacitance type or the self-capacitance type.

According to the touch detection device and the touch panel device as described herein, the capacitances of the plurality of points detected by the touch detection circuit are regarded as the base capacitances serving as the references for detecting the amounts of changes in the capacitances in response to touches on the points, and calibration is performed only when the levels of changes in the base capacitances of the plurality of points from the base capacitances in the last calibration are large and the variation in the base capacitances of the points is small.

Therefore, it is possible to arrange for the calibration to be performed when the base capacitances have changed on the whole due to temporal change or the like, and to prevent the calibration from being performed when the base capacitances have partially undergone large changes due to temporary placement of a conductive material near the touch panel. Therefore, it is possible to perform calibration only in a situation in which performing the calibration is truly appropriate.

As described above, according to the present disclosure, it is possible to perform calibration of a touch detection device for detecting the amount of a change in the capacitance of each point on a capacitance-type touch panel only in a situation in which performing the calibration is truly appropriate.
FIG. 1 is a block diagram showing the configuration of a touch panel unit according to a first embodiment of the present disclosure;
FIG. 2 is a diagram showing a configuration of electrodes of a touch panel according to the first embodiment of the present disclosure and a relationship between the electrodes and a detection circuit;
FIG. 3 is a diagram showing a configuration of the detection circuit according to the first embodiment of the present disclosure;
FIG. 4 is a graph showing calibration of the detection circuit performed in the first embodiment of the present disclosure;
FIG. 5 is a diagram showing an application example of the touch panel unit according to the first embodiment of the present disclosure;
FIG. 6 is a flowchart showing a calibration process according to the first embodiment of the present disclosure;
FIG. 7 is a diagram showing an example of a variation index value used in the first embodiment of the present disclosure;
FIG. 8 is a diagram showing a touch panel according to a second embodiment of the present disclosure and an example of correction of a capacitance distribution;
FIG. 9 is a flowchart showing a calibration process according to the second embodiment of the present disclosure; and
FIG. 10 is a flowchart showing a calibration process according to a third embodiment of the present disclosure.

Hereinafter, embodiments of the present disclosure in examples of application to a self-capacitance-type touch panel will be described.

First, a first embodiment will be described.

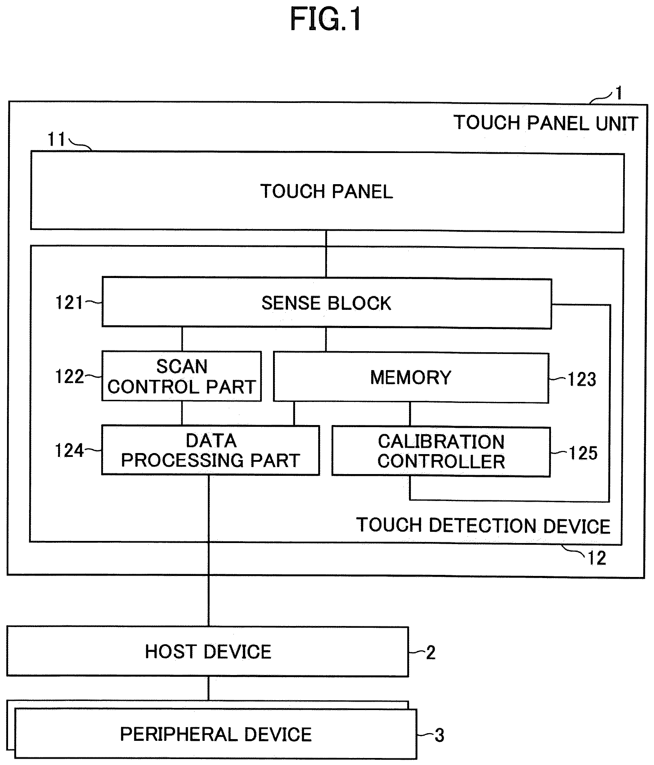

FIG. 1 shows the configuration of a touch panel unit in the first embodiment.

As shown, a touch panel unit 1 is a device that functions as a pointing device of a host device 2. The host device 2 includes other peripheral devices 3, such as a display unit and the like. The touch panel unit 1 includes a touch panel 11 and a touch detection device 12.

The touch detection device 12 includes a sense block 121, a scan control part 122, a memory 123, a data processing part 124, and a calibration controller 125. The scan control part 122, the data processing part 124, and the calibration controller 125 are composed of an electronic circuit, such as a Central Processing Unit (CPU), a Field Programmable Gate Array (FPGA), an Application Specific Integrated Circuit (ASIC), or the like, and are configured to perform various processes described herein by executing instruction codes stored in a memory or by being designed as a circuit for a specific application.

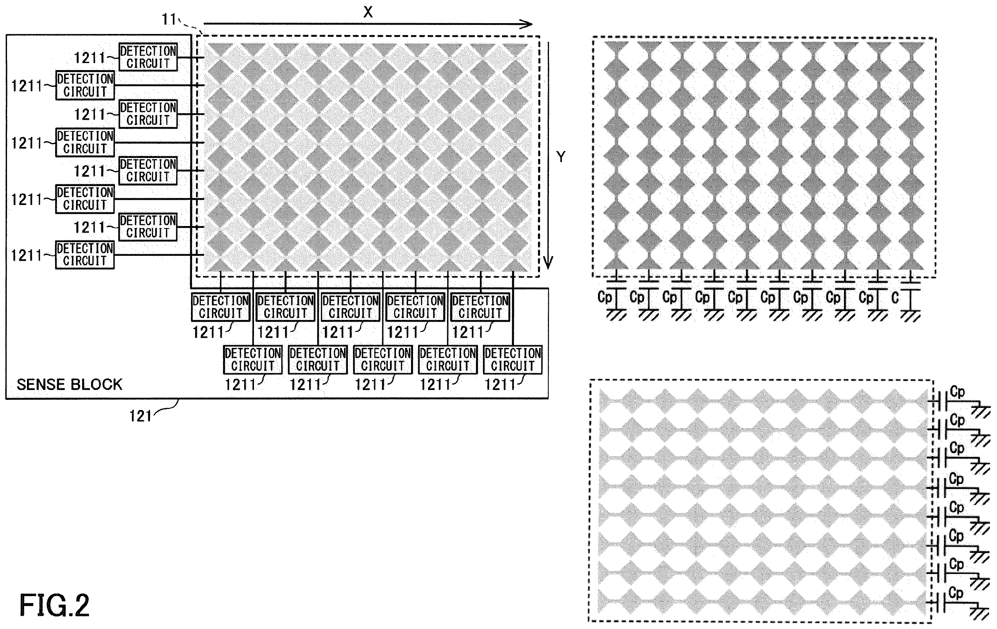

As shown in the upper left view in FIG. 2, the touch panel 11 includes a structure in which an X electrode group, shown in the upper right view in FIG. 2 in which X electrodes extending in the Y direction are arranged side by side in the X direction and a Y electrode group shown in the lower right view in FIG. 2 in which Y electrodes extending in the X direction are arranged side by side in the Y direction are stacked while being insulated from each other. The sense block 121 of the touch detection device 12 includes detection circuits 1211 provided in one-to-one correspondence to the Y electrodes and the X electrodes and connected to their corresponding electrodes.

Further, as shown in the upper right and lower right views in FIG. 2, each of the X electrodes and the Y electrodes has a parasitic capacitance between itself and the ground, and this parasitic capacitance is denoted by Cp in the following description. This parasitic capacitance Cp serves as a base capacitance for detecting the amount of change in the capacitance in response to a touch.

Hereinafter, for the sake of explanation, when it is not necessary to distinguish between the X electrodes and the Y electrodes, both electrodes are generically referred to as "electrodes".

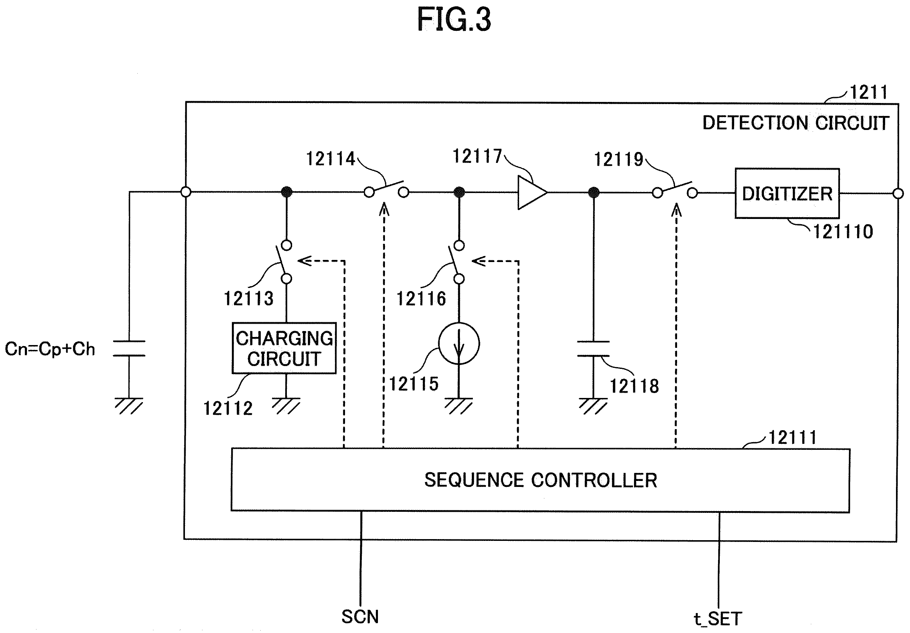

Next, FIG. 3 shows a configuration of a detection circuit 1211.

As shown, the detection circuit 1211 includes a sequence controller 12111, a charging circuit 12112, a first switch 12113, a second switch 12114, a constant current circuit 12115, a third switch 12116, an attenuator 12117, a capacitor 12118, a fourth switch 12119, and a digitizer 121110.

In this configuration, when a scan signal SCN is input from the scan control part 122, the sequence controller 12111 causes the detection circuit 1211 to perform a series of operations composed of an operation in a first period described below, an operation in a second period described below, and an operation in a third period described below.

That is, in the first period, only the first switch 12113 is switched on, and the charging circuit 12112 is connected to the corresponding electrode, to charge a capacitance Cn between the corresponding electrode and the ground. When no touch occurs, this capacitance Cn is equal to the parasitic capacitance Cp of the corresponding electrode, and when a touch occurs, the capacitance Cn is the sum of the parasitic capacitance Cp of the corresponding electrode and a capacitance Ch between the corresponding electrode and the ground via a human body.

Next, in the second period, the first switch 12113 and the fourth switch 12119 are switched off, and the second switch 12114 is switched on, to transfer the charge, with which the capacitance Cn of the corresponding electrode is charged, to the capacitor 12118 via the attenuator 12117. Also, in the second period, the third switch 12116 is switched on for a time t that is set by the calibration controller 125, to branch a part of the charge flowing from the capacitance Cn of the corresponding electrode to the ground.

Next, in the third period, only the fourth switch 12119 is switched on to apply a voltage corresponding to the charge stored in the capacitor 12118 to the digitizer 121110, and the digitizer 121110 converts the applied voltage to a digital value, and outputs and stores it in the memory 123 as RAW data.

As a result, the output from the digitizer 121110 is a value proportional to the capacitance Cn of the corresponding electrode.

In such an operation, the charge to be stored in the capacitor 12118, and therefore, the voltage to be applied to the digitizer 121110, can be adjusted based on the time t for which the third switch 12116 is switched on in the second period. This makes it possible to shift a measurement range, which is a range of capacitances Cn of the electrode that can be correctly converted to digital values by the digitizer 121110.

Therefore, the calibration controller 125 can calibrate the detection circuit 1211 by setting, in the sequence controller 12111, the time t for which the third switch 12116 is switched on such that, for example, a change in the parasitic capacitance Cp of the corresponding electrode will be offset, by means of a signal t_SET.

Returning to FIG. 1, the scan control part 122 outputs the above-described scan signal SCN sequentially to the respective detection circuits 1211 of the sense block 121 at timings synchronized with synchronization signals input from the data processing part 124.

The data processing part 124 analyzes the RAW data stored by the digitizer 121110 of each detection circuit 1211 in the memory 123, calculates whether or not a touch has occurred, the XY coordinates at which a touch has occurred in a case where a touch has occurred, and the like, and outputs the result to the host device 2.

When the touch panel unit 1 is activated (when the power is turned on), the calibration controller 125 performs a calibration control process using the RAW data stored by the digitizer 121110 of each detection circuit 1211 in the memory 123, to perform, as needed, calibration for resetting the time t for which the third switch 12116 of each detection circuit 1211 is switched on.

First, a calibration performed in the calibration control process will be described.

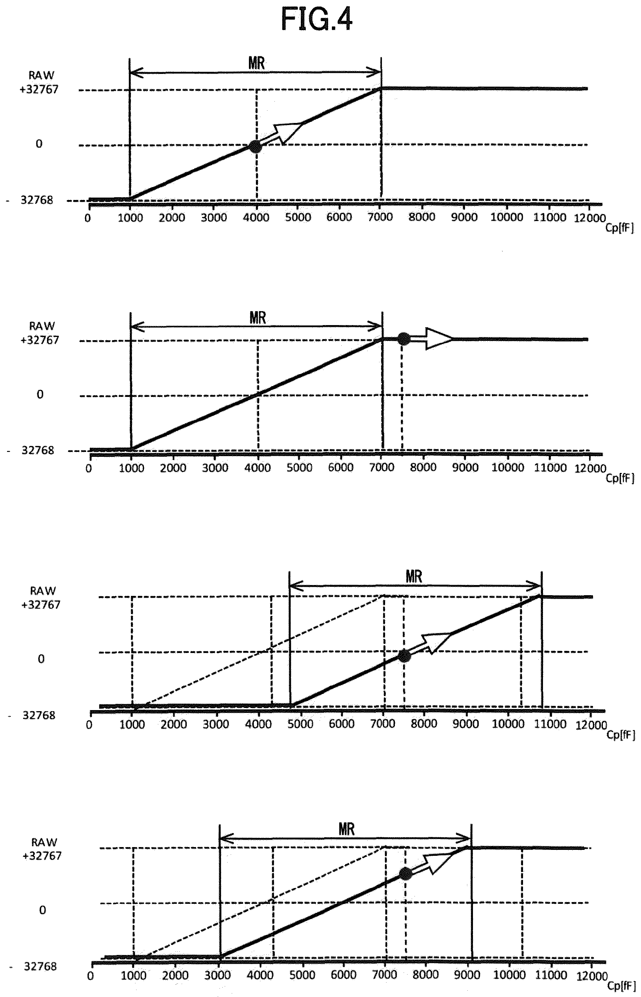

Now, when the time t for which the third switch 12116 of the detection circuit 1211 is switched on is set such that the digitizer 121110 digitizes the capacitance Cn of the electrode ranging from 1,000 fF to 7,000 fF, to a digital value ranging from -32,768 to +32,768 as shown in the first graph from the top in FIG. 4, the measurement range MR in which the capacitance Cn of the electrode is measured is from 1,000 fF to 7,000 fF. In this case, all capacitance values Cn that are less than 1,000 fF, which is under the measurement range MR, are digitized to -32,768, and all capacitance values Cn that are greater than 7,000 fF, which is greater than the measurement range MR, are digitized to +32,768.

Therefore, when the parasitic capacitance Cp of the electrode is 4,000 fF and an increase in the capacitance Cn of the electrode in response to a touch (i.e., the capacitance Ch via a human body) is approximately 1,000 fF, the capacitance values Cn of the electrode before and after the touch indicated by an arrow fall within the measurement range MR, and the change in the capacitance Cn of the electrode can be detected without any problem.

On the other hand, when the parasitic capacitance Cp of the electrode changes to 7,500 fF as shown in the second graph from the top in FIG. 4 when this measurement range MR is set, the capacitance values Cn of the electrode before and after a touch indicated by an arrow both fall outside the measurement range MR, and the change in the capacitance Cn of the electrode cannot be detected.

Therefore, in the calibration, for example, the time t for which the third switch 12116 of the detection circuit 1211 is switched on is changed, to re-set the measurement range MR such that the parasitic capacitance Cp of the electrode becomes a value as close to the center value of the measurement range MR as possible as shown in the third graph from the top in FIG. 4.

However, in the calibration, it is not essentially necessary to re-set the measurement range MR such that the parasitic capacitance Cp of the electrode becomes the center value. For example, as shown in the fourth graph from the top in FIG. 4, the measurement range MR may be re-set to another measurement range MR in which the capacitance values Cn of the electrode before and after a touch can both be expected to fall within. In this case, the calibration controller 125 sets, in the sequence controller 12111, such a time t for which the third switch 12116 is switched on as to offset a part of the change in the parasitic capacitance Cp of the corresponding electrode.

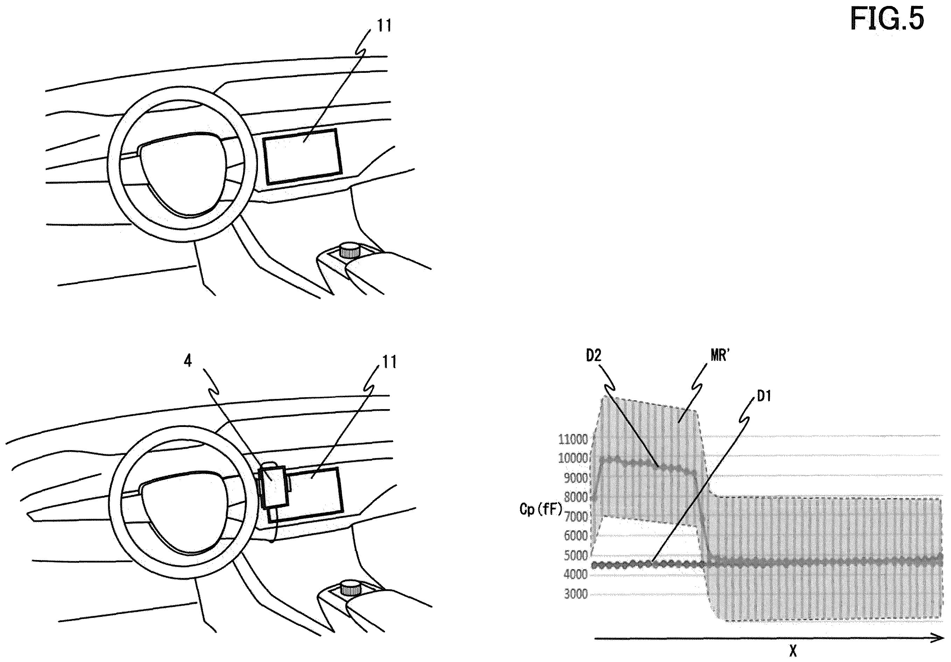

The calibration control process according to the first embodiment is a process applied to a case where the touch panel 11 of the touch panel unit 1 is a touch panel 11 situated on the surface of a display placed on a center dashboard or the like of an automobile as shown in the upper left view in FIG. 5.

In the case of the display and the touch panel 11 situated as shown in the upper left view in FIG. 5, there is a case where a user inconstantly places a smartphone 4, which is in a state of being connected to a charging cable, on the front surface of the display or the touch panel 11 by using a holder as shown in the lower left view in FIG. 5.

As an X-direction distribution of the capacitances Cp of the electrodes being shown in the lower right graph in FIG. 5, a distribution D1 of a case where the smartphone 4 is not placed is approximately flat, whereas a distribution D2 of a case where the smartphone 4 is placed includes remarkable increases in the capacitances Cp in and around the range in which the smartphone 4 is placed.

In this case, when the measurement range MR is set by performing calibration of the detection circuit 1211 corresponding to each X electrode based on the distribution D2, the measurement range MR of each detection circuit 1211 becomes the one denoted by MR' in the graph.

When the smartphone 4 is removed after such calibration is performed, the distribution of the parasitic capacitances Cp of the electrodes returns to the distribution D1. Therefore, in the X-direction range in which the smartphone 4 has been placed, the capacitance range around each parasitic capacitance Cp is outside the measurement range MR and changes in the capacitance Cn of each electrode cannot be detected.

Therefore, the calibration control process does not perform the calibration in such a case, and controls performing of the calibration such that the calibration is performed only in a situation in which performing the calibration is truly appropriate.

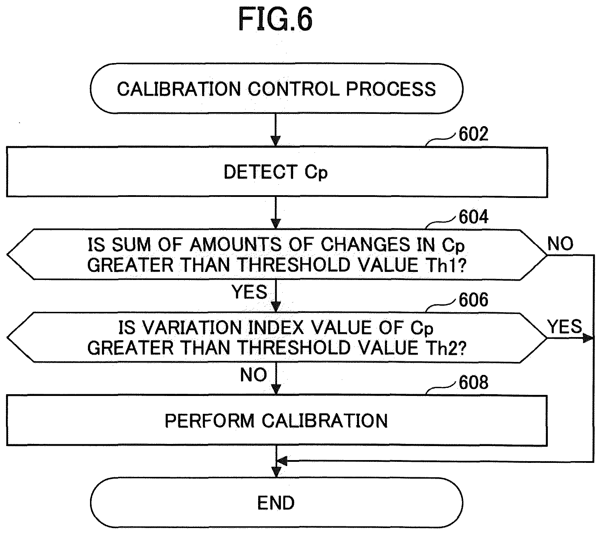

FIG. 6 shows the procedure of this calibration control process.

Here, the calibration controller 125 performs this calibration control process when the touch panel unit 1 is activated (when the power is turned on).

As shown, in the calibration control process, the calibration controller 125 first detects the parasitic capacitance Cp of the electrode corresponding to each detection circuit 1211 from the RAW data stored by the digitizer 121110 of each detection circuit 1211 in the memory 123 (step 602).

Here, in step 602, the parasitic capacitance Cp of each electrode is detected, assuming that the capacitance Cn of the electrode represented by the RAW data is equal to the parasitic capacitance Cp. It is possible to obtain the capacitance Cn of the electrode by, for example, performing a back-calculation that applies to the RAW data, an action that is counter to the action of the detection circuit 1211 and that takes into consideration the time t for which the third switch 12116 is switched on.

Then, the amount of change in the parasitic capacitance Cp detected in step 602 from the value of the parasitic capacitance Cp detected in the last calibration control process is calculated for each electrode, and it is checked whether or not the sum of the amounts of changes calculated for the respective electrodes is greater than a predetermined threshold value Th1 (step 604). When the sum is not greater than the threshold value Th1, the calibration control process is terminated.

On the other hand, when the obtained sum of the amounts of changes is greater than the threshold value Th1, a variation index value indicating the magnitude of variation of the detected parasitic capacitances Cp of the electrodes is calculated, and it is checked whether or not the variation index value is greater than a predetermined threshold value Th2 (step 606). When the variation index value is greater than the threshold value Th2, the calibration control process is terminated.

On the other hand, when the variation index value is not greater than the value Th2, the above-described calibration is performed for each detection circuit 1211 (step 608), and the calibration control process is ended.

According to this calibration control process, calibration is performed only when the amounts of changes in the parasitic capacitances Cp of the electrodes is large and the variation of the parasitic capacitances Cp of the electrodes is not large.

Therefore, it is possible to perform the calibration when the parasitic capacitances Cp of the electrodes have changed on the whole due to temporal change or the like, and to prevent the calibration from being performed when the parasitic capacitances Cp have partially undergone large changes as shown by D2 in the lower right graph in FIG. 5 because the smartphone 4 has been inconstantly placed on the front surface of the touch panel 11 as shown in the lower left view in FIG. 5. Therefore, the calibration is performed only in a situation in which performing the calibration is truly appropriate.

Not performing the calibration with respect to the distribution D2 of the parasitic capacitances Cp in the lower right graph in FIG. 5 makes it impossible to detect a touch property in a region of the touch panel 11 that is behind the smartphone 4. However, this does not bring about a problem because this region is a region that is blocked from being accessed by the user by the smartphone 4 and will not be touched.

An event in which the Cp values change inconstantly occurs not only in the situation in which the smartphone 4 is placed, but also in a situation in which, for example, a palm of the user is touching the touch panel 11 while the calibration control process is being performed, and the like. According to this embodiment, it is possible to prevent the calibration from being performed inappropriately in such a case as well.

As the variation index value calculated in step 606, various index values can be used as long as such values indicate the magnitude of the variation of the parasitic capacitances Cp of the electrodes detected in step 602.

For example, as the variation index value, the difference between the maximum value and the minimum value of the parasitic capacitances Cp of the electrodes detected in step 602 can be used.

Alternatively, as the variation index value, the dispersion of the parasitic capacitances Cp of the electrodes and the like can be used.

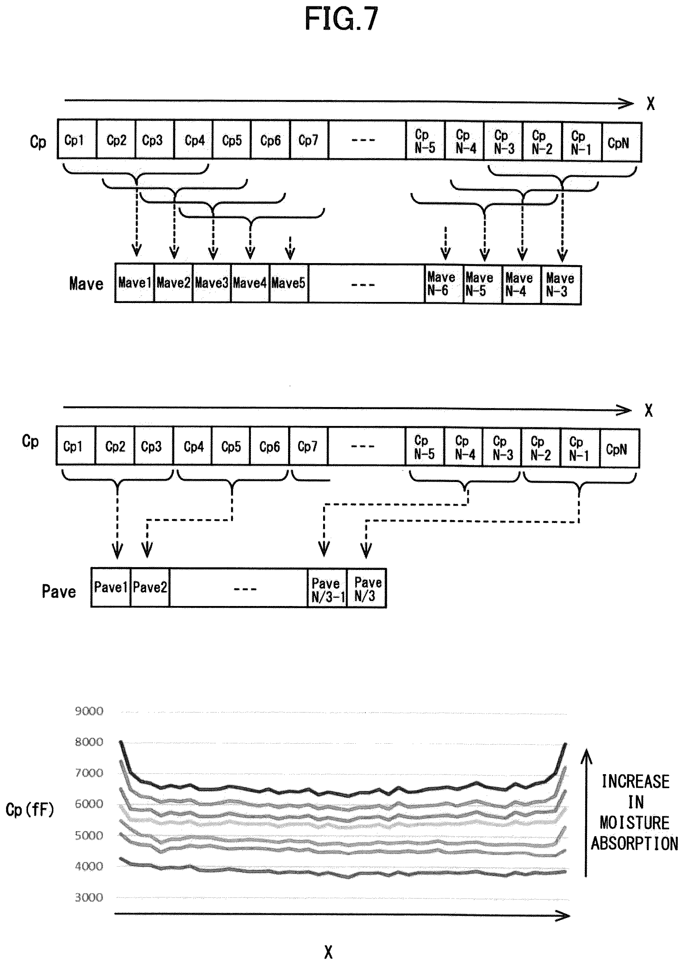

Alternatively, moving averages Mave of the parasitic capacitances Cp of the electrodes, which are as shown in the upper diagram in FIG. 7 for the X electrode group, or per-region averages Pave of the parasitic capacitances Cp of the electrodes, which are as shown in the middle diagram in FIG. 7 for the X electrode group, may be used instead of the parasitic capacitances Cp of the electrodes, such that the difference between the maximum value and the minimum value of, or the dispersion of, the moving averages Mave or the per-region averages Pave may be used as the variation index value.

In the upper and middle diagrams in FIG. 7, Cpi represents the parasitic capacitance Cp of the i-th electrode in the order of arrangement in the X direction, and Mavei and Pavei represent the moving average Mave or the per-region average Pave in the i-th region in the order of arrangement in the X direction.

When using moving averages Mave or per-region averages Pave, moving averages Mave or the per-region averages Pave are calculated for the X electrode group and the Y electrode group, respectively.

By using moving averages Mave or per-region averages Pave in this way, it is possible to accurately detect variation that appears as spatial imbalance in the X or Y direction, such as the distribution D2 in the lower right graph in FIG. 5 which occurs when the smartphone 4 is placed on the front surface of the touch panel 11, so as to avoid performing calibration.

Furthermore, by using moving averages Mave or per-region averages Pave in this way, it is possible to discern a spatially spread distribution of increased parasitic capacitances Cp of electrodes, such as D2 in the lower right graph in FIG. 5, distinctively from increased parasitic capacitances Cp of local electrodes due to increased moisture absorption at both ends of the touch panel 11 that easily get in touch with the outside as shown in the lower graph in FIG. 7 for the X direction, or from impulse noise-affected parasitic capacitances Cp of local electrodes. In the lower graph in FIG. 7, a graph on the more upper side is a graph of a case where the degree of moisture absorption is higher.

Next, a second embodiment of the present disclosure will be described.

The second embodiment is for a case where the parasitic capacitances Cp of the respective electrodes have a designed variation.

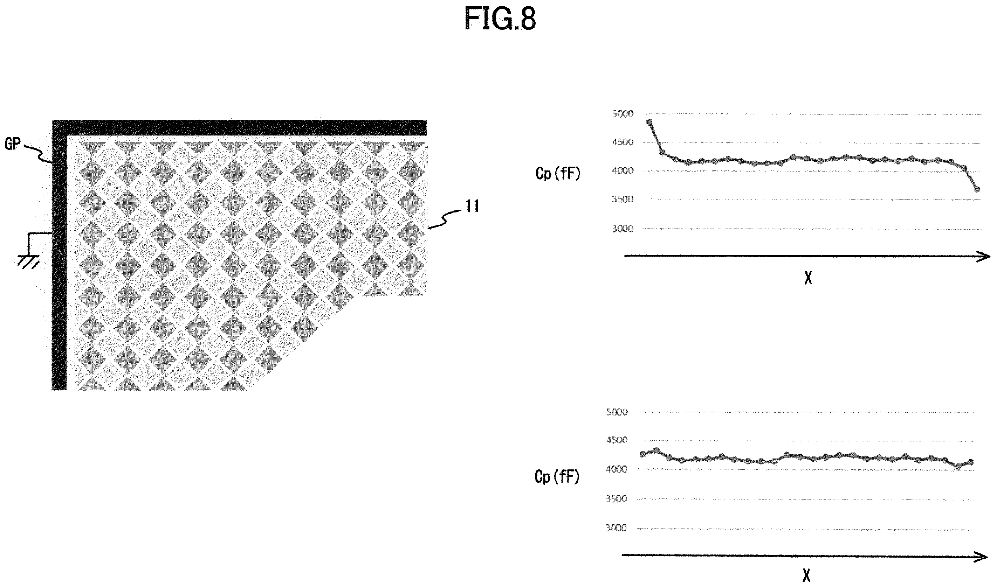

Such designed variations include variations in the parasitic capacitances Cp of the electrodes due to at least a part of the periphery of the touch panel 11 being surrounded by a ground pattern GP, or the touch panel 11 being not rectangular and the electrodes being varied in size, as shown in the upper left view in FIG. 8.

In the case of the touch panel 11 shown in the upper left view in FIG. 8, as shown in the upper right graph in FIG. 8 regarding the X direction, the parasitic capacitances Cp of the electrodes near the ground pattern GP are higher due to increased coupling with the ground, and the parasitic capacitances Cp in a range in which the electrodes have a smaller size are lower.

Therefore, in the second embodiment, before calculating a variation index value as in the first embodiment, the parasitic capacitance Cp of each electrode is corrected such that the designed variation is offset, to calculate a variation index value of the corrected parasitic capacitances Cp of the electrodes. In this correction, for example, when the designed variation is the one shown in the upper right graph in FIG. 8, the parasitic capacitance Cp of each electrode is corrected to the parasitic capacitance Cp shown in the lower right graph in FIG. 8, with the designed variation offset.

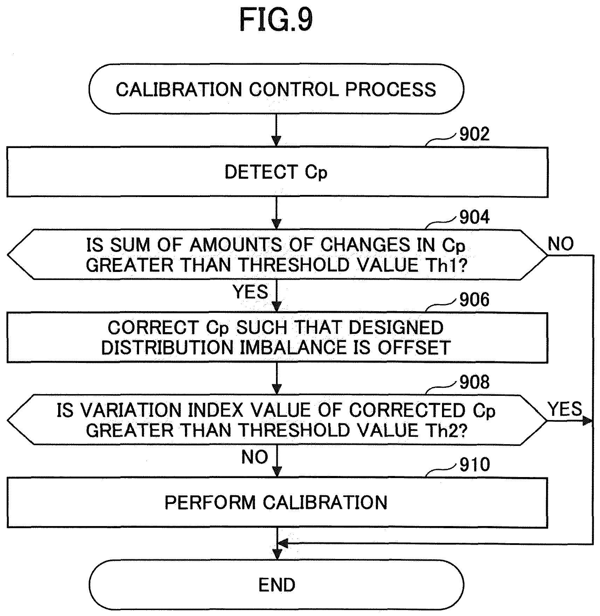

FIG. 9 shows the procedure of the calibration control process for performing this correction.

As shown, in the calibration control process, the calibration controller 125 first detects the parasitic capacitance Cp of the electrode corresponding to each detection circuit 1211 from the RAW data stored by the digitizer 121110 of each detection circuit 1211 in the memory 123 (step 902).

Then, the amount of change in the parasitic capacitance Cp from the value detected in the last calibration control process is calculated for each electrode, and it is checked whether the sum of the obtained amounts of changes is greater than a predetermined threshold value Th1 (step 904). When the sum of the calculated amounts of changes is not greater than the threshold value Th1, the calibration control process is terminated.

On the other hand, when the sum of the calculated amounts of changes is greater than the threshold Th1, the detected parasitic capacitance Cp of each electrode is corrected such that the designed variation is offset (step 906).

Then, a variation index value indicating the magnitude of the variation in the corrected parasitic capacitances Cp of the electrodes is calculated, and it is checked whether the variation index value is greater than a predetermined threshold value Th2 (step 908). When the variation index value is greater than the threshold value Th2, the calibration control process is terminated.

On the other hand, when the variation index value is not greater than the threshold value Th2, the above-described calibration is performed for each detection circuit 1211 (step 910), and the calibration control process is ended.

Next, a third embodiment of the present disclosure will be described.

The third embodiment is for canceling an erroneous calibration that has been performed, where the erroneous calibration has been performed due to occurrence of a touch on the touch panel 11 by a human body or occurrence of a conductive material near the touch panel 11 while the calibration is being performed.

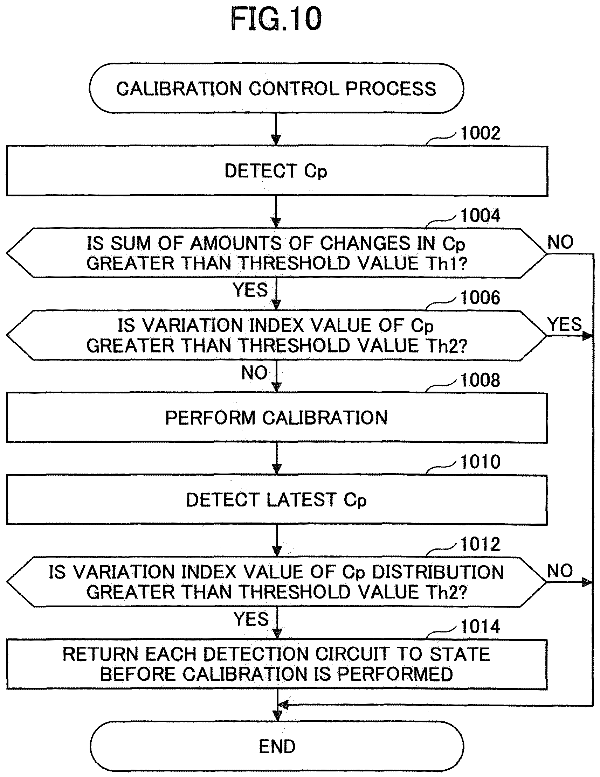

FIG. 10 shows the procedure of the calibration control process for performing this cancellation.

As shown, in the calibration control process, the calibration controller 125 first detects the parasitic capacitance Cp of the electrode corresponding to each detection circuit 1211 from the RAW data stored by the digitizer 121110 of each detection circuit 1211 in the memory 123 (step 1002).

Then, the amount of change in the parasitic capacitance Cp from the value detected in the last calibration control process is calculated for each electrode, and it is checked whether or not the sum of the calculated amounts of changes is greater than a predetermined threshold value Th1 (step 1004). When the sum of the calculated amounts of changes is not greater than the threshold value Th1, the calibration control process is terminated.

On the other hand, when the sum of the calculated amounts of changes is greater than the threshold value Th1, a variation index value indicating the magnitude of variation in the detected parasitic capacitances Cp of the electrodes is calculated, and it is checked whether or not the variation index value is greater than a predetermined threshold value Th2 (step 1006). When it is greater than the threshold value Th2, the calibration control process is terminated.

On the other hand, when the variation index value is not greater than the threshold value Th2, the above-described calibration is performed for each detection circuit 1211 (step 1008).

Next, when the calibration is completed, the latest parasitic capacitance Cp of the electrode corresponding to each detection circuit 1211 is detected again from the RAW data stored by the digitizer 121110 of each detection circuit 1211 in the memory 123 (step 1010).

Then, the variation index value indicating the magnitude of variation in the detected parasitic capacitances Cp of the electrodes is calculated again, and it is checked whether or not the variation index value is greater than the predetermined threshold value Th2 (step 1012). When the variation index value is not greater than the predetermined threshold value Th2, the calibration control process is terminated.

On the other hand, when the variation index value is greater than the predetermined threshold value Th2, the state of each detection circuit 1211 is returned to the state before the calibration is performed in step 1008, thereby canceling the calibration (step 1014), and the calibration control process is ended. More specifically, in step 1014, the time t for which the third switch 12116 of each detection circuit 1211 is switched on is returned to the time t before the calibration is performed in step 1008.

Also in the calibration control process of the third embodiment, the parasitic capacitance Cp of each electrode may be corrected such that a designed variation is offset as in the second embodiment before calculating the variation index values in steps 1006 and 1012, and the variation index values of the corrected parasitic capacitances Cp of the electrodes may be calculated.

In the above embodiments, the calibration is performed by adjusting the time t for which the third switch 12116 of the detection circuit 1211 shown in FIG. 3 is switched on. However, the calibration may be performed by adjusting the specifications of any other element of the detection circuit 1211 (for example, the value of the constant current of the constant current circuit 12115, or the attenuation rate of the attenuator 12117). Further, as the detection circuit 1211, a detection circuit 1211 having a configuration different from that shown in FIG. 3 may be used.

Further, although the application to the self-capacitance-type touch panel 11 has been described above as an example, the present embodiments can be similarly applied to a touch panel 11 of a mutual capacitance type.

That is, in this case, it is only needed that calibration is performed only when the amounts of changes in the mutual capacitances between Y electrodes and X electrodes in a non-touched state, which are the base capacitances in a mutual capacitance system, are large, and variation in the base capacitances is not large.

## Claims

1. A touch detection device configured for detecting a touch on a touch panel of a capacitance type, the touch detection device comprising:
a touch detection circuit configured to detect a capacitance of each of a plurality of points on the touch panel; and
a calibration part configured to perform calibration for adjusting a range in which the touch detection circuit detects the capacitance of each point,
wherein the calibration part is configured to acquire, at a predetermined opportunity, capacitances of the plurality of points detected by the touch detection circuit, and
when a change level indicating a level of a change in the capacitance of each point acquired, from a capacitance thereof in a last calibration, is greater than a predetermined level, and an index value indicating a degree of variation in the capacitances of the points acquired is less than a predetermined value, the calibration part is configured to perform calibration for adjusting the range in which the touch detection circuit detects the capacitance of each point such that the range includes both a capacitance of the point when the point is not touched and a capacitance of the point when the point is touched, based on the capacitance of the point acquired.

2. The touch detection device according to claim 1,
wherein the calibration part is configured to use, as the change level, a sum of amounts of changes in the capacitances of the points acquired, from capacitances in the last calibration.

3. The touch detection device according to claim 1 or 2,
wherein the calibration part is configured to use, as the index value, a difference between a maximum value and a minimum value of the capacitances of the points acquired.

4. The touch detection device according to one of claims 1 to 3,
wherein the calibration part is configured to use, as the index value, a difference between a maximum value and a minimum value of moving averages of the capacitances of the points acquired, each of the moving averages being a moving average calculated for two or more points in one direction on the touch panel, where the one direction is a moving direction.

5. The touch detection device according to one of claims 1 to 4,
wherein the calibration part is configured to use, as the index value, a difference between a maximum value and a minimum value of averages of the capacitances of the points acquired, the averages being averages calculated in a plurality of regions obtained by dividing the touch panel in at least one direction, respectively.

6. The touch detection device according to one of claims 1 to 5,
wherein in the calibration, the calibration part is configured to adjust the range in which the touch detection circuit detects the capacitance of each point to a range centering on the capacitance of the point acquired.

7. The touch detection device according to one of claims 1 to 6,
wherein the calibration part is configured to correct the capacitance of each point acquired, such that a designed capacitance variation is at least partially offset, and to calculate, as the index value, a value indicating a degree of variation in the capacitances of the points corrected.

8. The touch detection device according to one of claims 1 to 7,
wherein the calibration part is configured to acquire the capacitances of the plurality of points detected by the touch detection circuit after the calibration is performed, and
when the index value indicating the degree of variation in the capacitances of the points thus acquired is greater than the predetermined value, the calibration part is configured to return the range in which the touch detection circuit detects the capacitance of each point to the range before the calibration is performed.

9. The touch detection device according to one of claims 1 to 8,
wherein the predetermined opportunity is activation of the touch detection device.

10. The touch detection device according to one of claims 1 to 9,
wherein the touch panel is a touch panel of a self-capacitance type including a plurality of X electrodes and a plurality of Y electrodes, and
each of the X electrodes and each of the Y electrodes is the point at which the capacitance is detected by the touch detection circuit.

11. A touch panel device, comprising:
the touch detection device of one of claims 1 to 10; and
the touch panel of the capacitance type.

12. A touch panel device, comprising:
the touch detection device of claim 10; and
the touch panel of the self-capacitance type.

13. A calibration method for calibrating a touch detection device used for detecting a touch on a touch panel of a capacitance type,
the touch detection device including:
a touch detection circuit for detecting a capacitance of each of a plurality of points on the touch panel; and
a calibration part,
the calibration method comprising:
the calibration part acquiring, at a predetermined opportunity, capacitances of the plurality of points detected by the touch detection circuit; and
when a change level indicating a level of a change in the capacitance of each point acquired in the acquiring, from a capacitance thereof in a last calibration is greater than a predetermined level, and an index value indicating a degree of variation in the capacitances of the points acquired is less than a predetermined value, the calibration part performing calibration for adjusting a range in which the touch detection circuit detects the capacitance of each point such that the range includes both a capacitance of the point when the point is not touched and a capacitance of the point when the point is touched, based on the capacitance of the point acquired.

14. The calibration method for calibrating the touch detection device according to claim 13,
wherein the touch panel is a touch panel of a self-capacitance type including a plurality of X electrodes and a plurality of Y electrodes, and
each of the X electrodes and each of the Y electrodes is the point at which the capacitance is detected by the touch detection circuit.
